(19) Europäisches Patentamt
European Patent Office
Office européen des brevets

(11) **EP 2 105 717 B1**

(12) **EUROPEAN PATENT SPECIFICATION**

(45) Date of publication and mention of the grant of the patent:
**16.12.2020   Bulletin 2020/51**

(51) Int Cl.:
**G01G 19/10** *(2006.01)*    **B60G 17/019** *(2006.01)*
**B60G 17/017** *(2006.01)*

(21) Application number: **08102997.7**

(22) Date of filing: **27.03.2008**

(54) **Method for defining the load weighing on an axle with mechanical suspension in a vehicle provided with at least an axle with pneumatic suspension provided with load detection system**

Verfahren zur Bestimmung der Last auf einer Achse mit mechanischer Aufhängung in einem Fahrzeug mit mindestens einer Achse mit Druckluftaufhängung mit Lasterkennungssystem

Procédé pour définir la charge pesant sur un essieu à suspension mécanique dans un véhicule doté d'au moins un essieu avec suspension pneumatique doté d'un système de détection de charge

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**30.09.2009   Bulletin 2009/40**

(73) Proprietor: **Iveco S.p.A.**
**10156 Torino (IT)**

(72) Inventor: **Stuerner, Johann**
**89079 Ulm (DE)**

(74) Representative: **Franzolin, Luigi et al**
**Studio Torta S.p.A.**
**Via Viotti, 9**
**10121 Torino (IT)**

(56) References cited:
**WO-A-03/044471      WO-A-2006/046903**
**DE-C1- 10 027 300**

**Description**

The present invention relates to a method for defining the load weighing on an axle with mechanical suspension of a vehicle provided with at least an axle with pneumatic suspension and load detection system, wherein the additional payload is proportionally distributed among the axles.

As already known, the indication of the load weighing on the axles of a vehicle, in particular a heavy vehicle used for transportation, is useful for different purposes. First, it allows the driver to have a precise indication about the load conditions of the vehicle, about the proper distribution of the load on the vehicle and therefore about the overall load, which is useful in order to not exceed the maximum permissible load for that type of vehicle. As a matter of fact, each vehicle is type approved, in running order, for a determined maximum permissible load limiting both the overall load and the load on its different axles, and the law requires the driver to respect this maximum load limit. The indication of the overall load of the vehicle is therefore very useful for the driver, who can always know if the vehicle load is beneath the maximum permissible load limits.

A further advantage of having the indication of the load weighing on each single axle is in the possibility for the manufacturer to verify if the vehicle has been properly used.

As a matter of fact, structural failures of vehicle components occur quite frequently because of the use of the vehicle in overload conditions, and the manufacturer, who has to replace the damaged component, cannot objectively determine if the failure took place despite a use of the vehicle according to the recommendations of the manufacturer, or if the failure was caused by an improper use of the vehicle and therefore there is no reason to replace the component free of charge or to draw conclusions about the correct functionality of the component itself.

Systems which can indicate the load weighing on an axle provided with pneumatic suspensions are known in the art. In these systems of the type known, one or more sensors, installed near the air springs of the pneumatic suspension, detect the existent pressure, which is proportional to the load, and send the data to a control unit which calculates the load from the pressure value.

The systems known in the art, however, can indicate the load weighing only on the axles provided with pneumatic suspensions.

In many cases, one single axle, the rear axle of the vehicle, is provided with pneumatic suspensions, while usually the front axle is provided with mechanical suspensions, which are not provided of any device for the measurement of the load weighing on the axle itself. In these situations, it is impossible to determine the load weighing on the front axle and therefore, which is not less important, it is impossible to determine the value of the overall load, without having to weigh the vehicle with the appropriate weighing machines.

WO03-044471 and WO2006-046903 are examples of solutions, whom features are in the preamble of claim 1.

The main task of the present invention is to provide a calculation method for defining the load weighing on an axle with mechanical suspension wherein the additional payload is proportionally distributed among the axes of a vehicle provided with at least a pneumatic suspension and a load detection system.

In the scope of this task, the purpose of the present invention is to provide a calculation method allowing to know the load weighing on each axle, as to avoid the accidental overloading of the axle itself.

A further purpose of the present invention is to provide a calculation method allowing to know the overall load weighing on the vehicle, without having to weigh the vehicle itself. The weighing machines of heavy vehicles are often hardly available, and the weighing operations, however, represent a loss of time for the carrier.

This task and these and other purposes that are explained below are achieved by a method according to claim 1.

Further characteristics and advantages of the present invention will become clear from the following detailed description, that is merely illustrative and not limitative and is shown in the figures that are attached hereto, in which:

figure 1 schematically shows a vehicle with the indication of the loads weighing on the chassis and on the axles;
figure 2 shows a diagram illustrative of the mathematical relation existing among the forces acting on the axles.

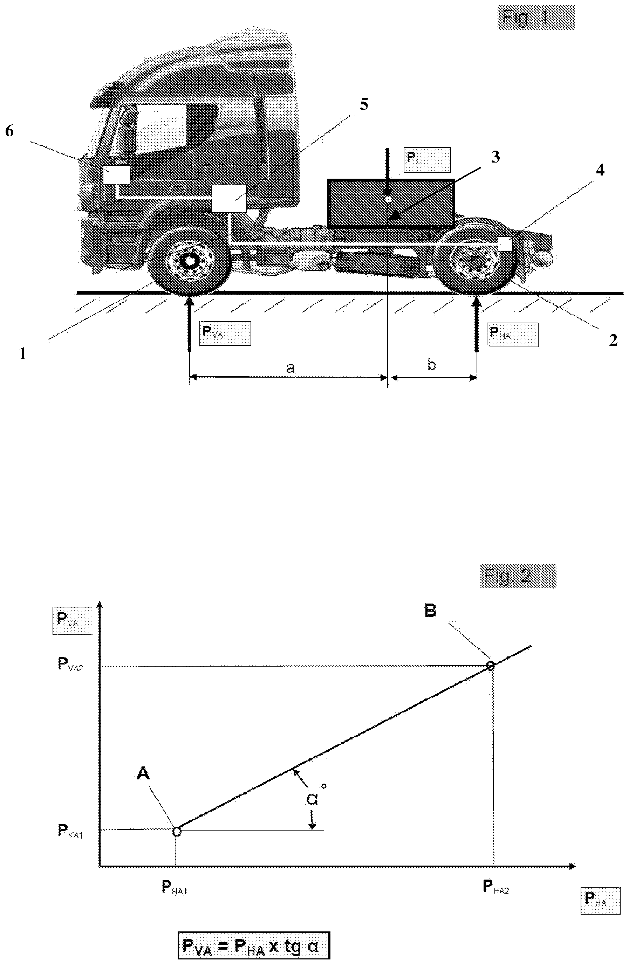

On a vehicle, for example a vehicle similar to that represented in figure 1, the additional payload is applied on the chassis in a symmetrical way.

The additional payload PL is shown as applied in correspondence of the baricenter of the additional weight applied on the chassis. With respect to the application point of the additional payload PL, the distances a and b of this indicated point from respectively the front axle 1, with mechanical suspension, and the rear axle 2, with pneumatic suspension, are known.

The mathematical relation among the acting forces is derived by a balance of the forces themselves and brings to the following relation:

$$P_{VA} = P_{HA} * b/a$$

Obviously, besides the additional payload PL, the balance of the forces includes also the mass of the vehicle itself, therefore in order to obtain the actual load weighing on each axle it is necessary to consider that the additional payload is not the only load weighing on the vehicle axles, and that the empty weight of the vehicle itself, before the application of the additional payload PL, is not to be considered as applied in correspondence of the additional load. The weight of engine, transmission, chassis and cab is not to be considered as applied to the same point as the additional payload PL.

Therefore, after having determined, by means of the balance of the forces, that the distribution of the additional payload PL between the front and the rear axle is of the linear type, since it is connected to the arms a and b, in order to calculate the ratio between the two loads weighing on the axles it is necessary to adopt an empirical method based on the measurement of the load weighing on the axle in at least two different load conditions, that is with two different values of the additional payload PL.

For a greater convenience, a first measuring operation of the loads weighing on the axles may of course be carried out with the vehicle without any additional load, but it has not to be necessarily so and the two load conditions may be any.

Therefore, as said, in order to find the linear relation connecting the values of the loads weighing on the axles PVA and PHA when the additional payload PL varies, first it is necessary to weigh the vehicle with an additional payload value PL1, which may be any, including zero, by reading the values PHA1 weighing on the rear axle, obtained by means of a sensor 4 suitable for detecting the pressure and a control unit 5 which calculates the load weighing on a pneumatic suspension, according to what is already known in the art. The value of the load PVA1 weighing on the front axle, instead, may be obtained by the weighing on an appropriate weighing machine.

Once the values PVA1 and PHA1 are known in a first loading condition, empty or with any PL1, it is possible to identify a first point A on the diagram, which connects PHA and PVA in figure 2.

A second weighing operation in a different additional payload condition PL2 allows to read the value PHA2 from the load detection system of the rear pneumatic suspension and the value PVA2 from the weighing machine, in order to identify the point B on the diagram of figure 2. Once the point A and B on the diagram are known, and expecting that the load distribution on the axles is of the linear type according to what explained above about the proportional distribution of the load on the axles, it is possible to use a linear interpolation in order to draw a line connecting the two points, A and B, and to determine its slope.

Once the angle $\alpha$ defining the slope of this line is known, for each value detected by the sensor 4 which detects the load weighing on the pneumatic suspension of the rear axle 2, PHA, it is possible to calculate the value of the load weighing on the axle with mechanical suspension 1 by means of the relation:

$$P_{VA} = P_{HA} * tg\alpha$$

The determination of the points A and B for the interpolation of the characteristics of the line of figure 2 expressing the relation between PVA and PHA may be carried out only once for one single vehicle of a whole range of similar vehicles, and the relative data obtained this way may be input in the control unit 5 of the vehicle that already manages, in the systems known in the art, the reading of the load weighing on the pneumatic suspension, or it may be input in a provided control unit.

According to what is shown in figure 1, the vehicle may be duly provided with a control unit 5 and a display system 6 of the load data processed by said control unit.

Moreover, the display system 6 may be duly provided with a display screen in order to show the value of the overall load of the vehicle. In order to process this data, once the control unit 6 has calculated the load weighing on each single axle by means of a direct detection in the case of pneumatic suspensions, or by means of the calculation described here in the case of mechanical suspension, the control unit 5 can display the loads on each axle and can also sum them in order to give, with a simple and immediate operation, the information about the overall load of the vehicle. This information is very useful for the driver and makes unnecessary the use of a weighing machine in order to determine the load conditions, in case of a control by the police.

In particular, the method for detecting the load according to the present invention may be easily and effectively used in all those cases wherein it is useful to count the goods, in case of a vehicle hauling goods. More in detail, it is known for example that in the field of the garbage collection, the firm which manages the collection is paid according to the quantity, expressed in weight, of garbage delivered to the garbage collection center. The evaluation of the quantity of material unloaded to the garbage collection or to the garbage incineration center are also useful to those managing the collection center or the incineration oven. At present, in order to quantify the load of a vehicle carrying out the garbage collection, scales or weighing machines for industrial vehicle have been used. This involves a loss of time for the weighing operations, but also the need to get such scales, which are expensive and very bulky.

The method for detecting the load according to this invention, in case it was used for detecting the load of a vehicle for garbage transport, would immediately make available the load data to the driver and to the garbage collection firm, making unnecessary the use of a scale. As a consequence, this results in a saving of time, because the weighing operation will not be carried out anymore, and in a saving of money, because it would be no longer necessary to buy and to maintain a truck weighing machine or to specially prepare some place devoted to said weighing machine and to the weighing operations of the load

Another application field where the method for detecting the load according to the present invention would be extremely useful to quantify the goods loaded and unloaded by degrees, is the case of the distribution to different customers of a product carried in a tank. The calculation of the volume of the distributed product may be carried out by means of the measurement of the variation of the load weight. In several other application fields it may be very useful to know the value of the carried load, and the method according to this invention fulfils the need to make the overall load value immediately available to the driver.

For example, the indication of the load weighing on each axle and of the overall load may be used for the electronic control of functional parameters of the engine, of the transmission, of the electronic management of the braking system, besides the management of the tyre pressure according to the load.

Therefore several other application fields may exist.

Therefore it has been shown that the method for defining the load weighing on an axle with mechanical suspension according to the present invention achieves the purpose and the objects proposed.

In particular, it has been shown that the method according to the present invention allows to calculate the load weighing on an axle with mechanical suspension by simply carrying out two weighing operation which may be carried out by the manufacturer before delivering the vehicle and only once for a whole range of similar vehicles. Once the necessary data have been obtained from the weighing operations, these may be input in a control unit of each vehicle without any need to repeat the weighing operations.

More in detail, the method according to the present invention allows to provide the driver with the indication about not only the load weighing on the axles equipped with mechanical suspensions, but also about the overall load of the vehicle by means of a rapid calculation, since it is possible to evaluate the load weighing on each axle and is therefore possible to simply sum the single loads in order to obtain the overall load of the vehicle.

In case a variation of the characteristics of the mechanical suspension influences the preciseness of the system, the variation may be removed by carrying out a calibration according to the procedures described above.

A further purpose achieved by the method according to the present invention is that it allows to obtain the measure of the load weighing on the axles with mechanical suspensions without any need of measuring devices or additional control units, therefore without complicating the on-board electronic system and without adding any further component which would make the system, and therefore the vehicle, more expensive.

It will be apparent to the person skilled in the art that various modifications can be conceived and reduced to practice without departing from the scope of the invention.

Therefore, the scope of the claims is not limited to the illustrations or the preferred embodiments shown in the description as an example, but rather the claims include all the patentable novelties deriving from the present invention, including all the equivalent embodiments for a person skilled in the art.

## Claims

1. Method for detecting the load ($P_{VA}$) weighing on a first vehicle axle (1) with mechanical suspension for vehicles used for transportation comprising at least a second axle (2) with pneumatic suspension provided with sensor (4) for the detection of the load ($P_{HA}$) weighing on said second (2) axle and a control unit (5) and wherein the additional payload ($P_L$) on the vehicle is distributed among said axles (1, 2), **characterized in that** it comprises:

   - a first step, carried only once on a single vehicle of a whole range of similar vehicles, for detecting the loads ($P_{HA1}$, $P_{VA1}$) weighing on the axles (1, 2), by weighing this latter on a weighing machine, with a first value ($P_{L1}$) of the additional payload ($P_L$);
   - a second step, carried only once on a single vehicle of a whole range of similar vehicles, for detecting the loads ($P_{HA2}$, $P_{VA2}$) weighing on the axles (1, 2), by weighing this latter on a weighing machine, with a second value ($P_{L2}$) of the additional payload ($P_L$);
   - a third calculation step for determining one parameter (tga) expressing a relation existing among the loads ($P_{VA}$, $P_{HA}$) weighing on the axles (1, 2);

   and **in that** it comprises:

   - a further step for determining the value of the load ($P_{VA}$) weighing on said first axle (1) with mechanical suspension by detecting the load value ($P_{HA}$) by means of said sensor (4) and said control unit (5) and multiplying said parameter (tga) by said detected loads value ($P_{HA}$), wherein said one parameter is a tangent of an angle (a) as angular coefficient of a linear interpolation calculation between at least two point (A, B) each of said points being representative of one of said two different values of the additional payload ($P_{L1}$, $P_{L2}$).

2. Method according to claim 1, **characterized in that** said steps for detecting the loads ($P_{HA1}$, $P_{VA1}$, $P_{HA2}$, $P_{VA2}$) weighing on the axles (1, 2) comprise the following stages:

- detect by means of said sensor (4) of the pneumatic suspension and by means of said control unit (5) the load ($P_{HA1}$) weighing on said second axle (2) provided with pneumatic suspension in a first load condition of the vehicle, with any value of additional payload ($P_{L1}$);
- carry out a first weighing operation of the vehicle in order to determine the value of the load ($P_{VA1}$) weighing on said first axle (1) provided with mechanical suspension in said first load condition;
- load the vehicle with an additional payload ($P_{L2}$) different from the previous ($P_{L1}$);
- detect by means of said sensor (4) and said control unit (5) the load ($P_{HA2}$) weighing on said second axle (2) in said second load condition;
- carry out a second weighing operation of the vehicle in order to determine the value of the load ($P_{VA2}$) weighing on said first axle (1) provided with mechanical suspension in said second load condition;

3. Electronic control unit (5) configured to execute a program for performing the steps of the method according to claim 1.

4. Vehicle for transportation comprising at least a first vehicle axle (1) with mechanical suspension, a second axle (2) with pneumatic suspension provided with sensor (4) for the detection of the load (PHA) weighing on said second axle (2) and a control unit (5) and wherein the additional payload (PL) on the vehicle is distributed among said axles (1,2) **characterized in that** the electronic control unit (5) is according claim3.

5. Vehicle according to claim 4, for hauling goods, in particular for hauling garbage.

**Patentansprüche**

1. Verfahren zur Bestimmung der Last ($P_{VA}$), die auf einer ersten Fahrzeugachse (1) mit einer mechanischen Aufhängung für Fahrzeuge, die für den Transport verwendet werden, lastet, umfassend mindestens eine zweite Achse (2) mit pneumatischer Aufhängung, die mit einem Sensor (4) zur Erfassung der Last ($P_{HA}$), die auf der zweiten Achse (2) lastet, ausgeführt ist, und eine Steuereinheit (5), wobei die zusätzliche Nutzlast ($P_L$) auf dem Fahrzeug auf die Achsen (1, 2) verteilt wird, **dadurch gekennzeichnet, dass** dieses Verfahren umfasst:

- einen ersten Schritt, der nur einmal auf einem einzigen Fahrzeug einer ganzen Reihe ähnlicher Fahrzeuge durchgeführt wird, um die auf den Achsen (1, 2) lastenden Lasten ($P_{HA1}$, $P_{VA1}$) zu bestimmen, wobei letztere auf einer Waage mit einem ersten Wert ($P_{L1}$) der zusätzlichen Nutzlast ($P_L$) gewogen werden;
- einen zweiten Schritt, der nur einmal auf einem einzigen Fahrzeug einer ganzen Reihe ähnlicher Fahrzeuge durchgeführt wird, um die auf den Achsen (1, 2) lastenden Lasten ($P_{HA2}$, PvA2) zu bestimmen, wobei letztere auf einer Waage mit einem zweiten Wert ($P_{L2}$) der zusätzlichen Nutzlast ($P_L$) gewogen werden;
- einen dritten Berechnungsschritt zur Bestimmung eines Parameters (tga), der einen Beziehung ausdrückt, die zwischen den Lasten ($P_{HA}$, $P_{VA}$) besteht, die auf den Achsen (1, 2) lasten;

und dadurch, dass dieses Verfahren umfasst:

- einen weiteren Schritt zur Bestimmung des Wertes der Last ($P_{VA}$), die auf der ersten Achse (1) mit mechanischer Aufhängung lastet, durch Erfassen des Lastenwertes ($P_{HA}$) mittels des Sensors (4) und der Steuereinheit (5) und durch Multiplizieren des Parameters (tga) mit dem erfassten Lastenwert ($P_{HA}$), wobei der eine Parameter ein Tangens eines Winkels (a) als Winkelkoeffizient einer linearen Interpolationsberechnung zwischen mindestens zwei Punkten (A, B) ist, wobei jeder der Punkte für einen der beiden unterschiedlichen Werte der zusätzlichen Nutzlasten ($P_{L1}$, $P_{L2}$) steht.

2. Verfahren nach Anspruch 1, **dadurch gekennzeichnet, dass** die Schritte der Bestimmung der Lasten ($P_{HA1}$, $P_{VA1}$, $P_{HA2}$, $P_{VA2}$), die auf den Achsen (1, 2,) lasten, die folgenden Schritte umfasst:

- mittels des Sensors (4) der pneumatischen Aufhängung und mittels der Steuereinheit (5) die Last ($P_{HA1}$) zu erfassen, die in einem ersten Beladungszustand des Fahrzeugs mit einem beliebigen Wert der zusätzlichen Nutzlast ($P_{L1}$) auf der zweiten Achse (2), die mit der pneumatischen Aufhängung versehen ist, lastet;
- einen ersten Wiegevorgang des Fahrzeugs durchzuführen, um den Wert der Last ($P_{VA1}$) zu bestimmen, die im ersten Beladungszustand auf der ersten Achse (1) lastet, die mit einer mechanischen Aufhängung versehen ist;
- das Fahrzeug mit einer zusätzlichen Nutzlast ($P_{L2}$) zu beladen, die sich von der ersten Nutzlast ($P_{L1}$) unterscheidet;
- mittels des Sensors (4) und der Steuereinheit (5) die Last ($P_{HA2}$) zu erfassen, die in dem zweiten Beladungszustand des Fahrzeugs auf der zweiten Achse (2) lastet;
- einen zweiten Wiegevorgang des Fahrzeugs durchführen, um den Wert der Last (PvA2) zu bestimmen, die im zweiten Beladungszustand auf der ersten Achse (1) lastet, die mit einer mechanischen Aufhängung versehen ist.

3. Elektronische Steuereinheit (5), ausgeführt, um ein Programm zur Durchführung der Schritte des Verfahrens nach Anspruch 1 auszuführen.

4. Transportfahrzeug, umfassend mindestens eine erste Achse (1) mit einer mechanischen Aufhängung, eine zweite Achse (2) mit einer pneumatischen Aufhängung, die mit dem Sensor (4) ausgeführt ist, um die Last ($P_{HA}$) zu bestimmen, die auf der zweiten Achse (2) lastet, und eine Steuereinheit (5), wobei die zusätzliche Nutzlast ($P_L$) auf dem Fahrzeug zwischen den Achsen (1, 2) verteilt wird, **dadurch gekennzeichnet, dass** die elektronische Steuereinheit (5) nach Anspruch 3 ausgeführt ist.

5. Fahrzeug nach Anspruch 4, für den Transport von Gütern, insbesondere für den Transport von Müll.

## Revendications

1. Procédé pour détecter une charge ($P_{VA}$) qui pèse sur un premier essieu de véhicule (1) qui comporte une suspension mécanique pour des véhicules utilisés pour le transport et qui comprennent au moins un second essieu (2) qui comporte une suspension pneumatique qui comporte un capteur (4) pour la détection de la charge ($P_{HA}$) qui pèse sur ledit second essieu (2) et une unité de commande (5) et dans lequel la charge utile additionnelle ($P_L$) sur le véhicule est distribuée entre lesdits essieux (1, 2), **caractérisé en ce qu'**il comprend :

- une première étape, qui est mise en œuvre seulement une fois sur un unique véhicule d'une gamme complète de véhicules similaires, pour détecter les charges ($P_{HA1}$, $P_{VA1}$) qui pèsent sur les essieux (1, 2), en pesant celles-ci sur une machine de pesée, avec une première valeur ($P_{L1}$) de la charge utile additionnelle ($P_L$) ;
- une deuxième étape, qui est mise en œuvre seulement une fois sur un unique véhicule d'une gamme complète de véhicules similaires, pour détecter les charges ($P_{HA2}$, $P_{VA2}$) qui pèsent sur les essieux (1, 2), en pesant celles-ci sur une machine de pesée, avec une seconde valeur ($P_{L2}$) de la charge utile additionnelle ($P_L$) ;
- une troisième étape de calcul pour déterminer un paramètre (tg$\alpha$) qui exprime une relation qui existe entre les charges ($P_{VA}$, $P_{HA}$) qui pèsent sur les essieux (1, 2) ;

et **en ce qu'**il comprend :

- une étape supplémentaire pour déterminer la valeur de la charge ($P_{VA}$) qui pèse sur ledit premier essieu (1) qui comporte une suspension mécanique en détectant la valeur de charge ($P_{HA}$) au moyen dudit capteur (4) et de ladite unité de commande (5) et en multipliant ledit paramètre (tg$\alpha$) par ladite valeur de charge détectée ($P_{HA}$), dans lequel ledit un paramètre est une tangente d'un angle ($\alpha$) en tant que coefficient angulaire d'un calcul d'interpolation linéaire entre au moins deux points (A, B), chacun desdits points étant représentatif de l'une desdites deux valeurs différentes de la charge utile additionnelle ($P_{L1}$, $P_{L2}$).

2. Procédé selon la revendication 1, **caractérisé en ce que** lesdites étapes pour détecter les charges ($P_{HA1}$, $P_{VA1}$, $P_{HA2}$, $P_{VA2}$) qui pèsent sur les essieux (1, 2) comprennent les phases qui suivent :

- la détection, au moyen dudit capteur (4) de la suspension pneumatique et au moyen de ladite unité de commande (5), de la charge ($P_{HA1}$) qui pèse sur ledit second essieu (2) qui comporte une suspension pneumatique dans une première condition de charge du véhicule, avec une quelconque valeur de charge utile additionnelle ($P_{L1}$) ;
- la mise en œuvre d'une première opération de pesée du véhicule afin de déterminer la valeur de la charge ($P_{VA1}$) qui pèse sur ledit premier essieu (1) qui comporte une suspension mécanique dans ladite première condition de charge ;
- la charge du véhicule à l'aide d'une charge utile additionnelle ($P_{L2}$) qui est différente de la charge utile précédente ($P_{L1}$) ;
- la détection, au moyen dudit capteur (4) et de ladite unité de commande (5), de la charge ($P_{HA2}$) qui pèse sur ledit second essieu (2) dans ladite seconde condition de charge ; et
- la mise en œuvre d'une seconde opération de pesée du véhicule afin de déterminer la valeur de la charge ($P_{VA2}$) qui pèse sur ledit premier essieu (1) qui comporte une suspension mécanique dans ladite seconde condition de charge.

3. Unité de commande électronique (5) configurée pour exécuter un programme pour réaliser les étapes du procédé selon la revendication 1.

4. Véhicule pour le transport, comprenant au moins un premier essieu de véhicule (1) qui comporte une suspension mécanique, un second essieu (2) qui comporte une suspension pneumatique qui comporte un capteur (4) pour la détection de la charge (PHA) qui pèse sur ledit second essieu (2) et une unité de commande (5) et dans lequel la charge utile additionnelle (PL) sur le véhicule est distribuée entre lesdits essieux (1, 2), **caractérisé en ce que** l'unité de commande électronique (5) est selon la revendication 3.

5. Véhicule selon la revendication 4, pour le transport de marchandises, en particulier le transport de déchets.

Fig 1

Fig 2

$$P_{VA} = P_{HA} \times tg\ \alpha$$

**EP 2 105 717 B1**

REFERENCES CITED IN THE DESCRIPTION

**Patent documents cited in the description**

- WO 03044471 A
- WO 2006046903 A